# EUROPEAN PATENT SPECIFICATION

(11) **EP 4 252 263 B1**
(45) Date of publication and mention of the grant of the patent: **04.11.2026**
(21) Application number: 20963801.4
(22) Date of filing: 31.12.2020
(51) Int. Cl.: H01G 11/30, H01G 11/48, H01G 11/70, H01G 11/46, H01G 11/28, H01G 11/86, H01G 11/58, H01G 11/62, H01G 11/68

(54) **AN ELECTRODE PROVIDING HIGH ENERGY AND POWER DENSITY AND SUPERCAPACITORS CONTAINING THE SAME**
ELEKTRODE MIT HOHER ENERGIE- UND LEISTUNGSDICHTE UND SUPERKONDENSATOREN DAMIT
ÉLECTRODE FOURNISSANT UNE ÉNERGIE ET UNE DENSITÉ DE PUISSANCE ÉLEVÉES ET SUPERCONDENSATEURS CONTENANT CETTE ÉLECTRODE

(30) Priority: 29.11.2020 TR 202019226; 29.11.2020 TR 202019228
(43) Date of publication of application: 04.10.2023
(73) Proprietor: Istanbul Universitesi Cerrahpasa Rektorlugu Ozel Kalem, Fatih/Istanbul (TR)
(72) Inventor: YAZAR AYDOGAN, Sibel, Bagcilar/Istanbul (TR); ATUN, Gülten, Kadiköy/ Istanbul (TR)
(74) Representative: Sevinç, Cenk
(86) International application number: PCT/TR2020/051480
(87) International publication number: WO 2022/115059

(56) References cited:
- WO-A1-2018/128788
- CN-A- 104 992 851
- CN-B- 101 882 480
- KR-A- 20190 128 880
- KR-B1- 101 571 244
- KR-B1- 101 571 244
- US-A1- 2014 255 776
- US-A1- 2017 237 061
- US-A1- 2018 355 194
- US-A1- 2019 019 632

## Description

### Technical Field of the Invention

The present invention generally relates to an electrode material and an energy storage system with increased energy storage performance. The invention, more particularly, provides a supercapacitor structure that has a high storage capacity in an aqueous electrolyte environment, a long cycle life, and low production costs, being capable of storing energy intensively in minimum volume as well as lightweight, and environmentally friendly, and present no performance loss by usage. In another aspect, the present invention relates to a bio-supercapacitor that contains a physiological liquid as an electrolyte and has an implantable feature providing a high energy and power density.

### Background of the Invention

Depending on the developing technology and the increase in the usage areas of the technology, the need for energy storage has been increasing day by day. It is intended to store energy in an easier and faster way, to provide more storage capacity, to use the stored energy for a long time, and accordingly to make the units where energy is stored long-lasting. Since energy is desired to be ready to use anywhere and at any time, it is important to develop storage systems.

It is also important to develop an environmentally friendly supercapacitor that has a high storage capacity, long cycle life, and low production cost, storing energy intensively in minimum volume, and operating it without damaging the environment.

Today, lithium-ion batteries play a significant role in energy storage. It has a wide range of applications from electronic devices to hybrid electric vehicles. Although battery technology is developing, the batteries used pose a threat to the environment and human health. Moreover, the costs of the energy storage systems increased depending on usage areas. More efficient results are obtained with supercapacitors which are designed to store energy in a safer way and with lower cost against the problems encountered in applications where the batteries are used.

The capacitors are developed in order to store electrical energy easily and quickly, provide large storage capacity, and use the stored energy for a long time. The capacitors are two-terminal passive terminals commonly used in electronics. Due to the developed technologies, their usage areas have been increasing by way of replacing the batteries having disadvantages in terms of human health and cost.

Today, supercapacitors are a novel energy storage technology developing gradually. They can provide 10 to 100 times more energy storage by unit volume or by weight than the conventional dielectric capacitors, be charged faster, and have more charge-discharge cycles in comparison to chargeable batteries.

Supercapacitors are generally designed by locating a pair of electrodes parallel to each other. In general, they act as an electrostatic device which stores energy by creating the electric field between the electrodes. Besides, in recent years, their performance has been increased with hybrid systems that present both electrostatic and faradaic features by combining carbon-based, polymeric, and metal oxide materials.

On the other hand, electronic devices are used for health applications in the biomedical field. Treatment techniques such as implants, prostheses, and long-term drug use are of great interest in healthcare. In particular, implantable medical devices such as implantable brain neurostimulator implants, cochlear implants, artificial pacemakers, gastric electrical stimulators, insulin pumps are used for various applications in many parts of the body. Although the mentioned practices lead to significant improvements for human health, it becomes important to be able to manage energy storage and consumption.

More efficient results are obtained with studies based on safer and lower cost supercapacitors against the problems encountered in applications where the signal is transmitted by radio frequency or externally non-rechargeable batteries are used. Biosupercapacitors are harmless as they support cell viability in biological systems. In case of implantation, they cause no irritation. Thus, they provide the opportunity to use by implanting in the body in treatment of patients.

US 2019/386333 relates to the formation of a lithium-ion battery structure. In relation to this battery, it is mentioned that sodium chloride is used in the electrolyte solution in order to acquire high operating voltages. EP 2315726 relates to a supercapacitor and a method of formation thereof. It is mentioned that sodium chloride can be used as an electrolyte solution in the supercapacitor. CN 109378223 relates to a supercapacitor and a method of preparation thereof. The supercapacitor also has various properties such as self-regeneration and biodegradability. Phosphoric acid, sodium chloride and deionized water solution are used as an electrolyte solution in the resulting supercapacitor.

Document no. CN 105324825 relates to a supercapacitor to be immersed in an environment containing biological material and oxidants. Said supercapacitor can be implanted in the animal or human. However, the composition of blood and/or serum in the body as an electrolyte material is not mentioned therein. US 10340546 relates to a biocompatible and implantable power equipment. Said power equipment is configured to distribute the biofluid across an anode and cathode electrode. KR101734822 relates to an in-vivo energy storage system. The energy storage device is implanted in the living body, electrically connected to the energy generating device, implanted in the living body and functions as an in-vivo energy storage system.

Document no. CN101882480 B relates to a method for preparing a polypyrrole/graphene composite material with enhanced electrochemical performance, particularly suitable for use as an electrode material in energy storage systems such as supercapacitors. The invention describes the preparation of graphene via chemical reduction of graphene oxide, followed by in-situ chemical oxidative polymerization of pyrrole on the graphene surface to form a conductive composite. By systematically controlling parameters such as graphene oxide concentration, pyrrole-to-graphene ratio, oxidant amount, pH, ultrasonic dispersion time, and polymerization conditions, the resulting composite exhibits high electrical conductivity, good chemical stability, and significantly improved specific capacitance.

Document no. WO 2018/128788 A1 relates to a method for preparing a polypyrrole/graphene composite material by chemical reduction of graphene oxide followed by in-situ oxidative polymerization of pyrrole, resulting in a highly conductive and chemically stable composite suitable for supercapacitor electrodes, with optimized process parameters leading to significantly enhanced specific capacitance.

The low and uneven distribution of lithium resources in the world increases the cost of Li-ion batteries. In addition, it has negative effects on human health and the environment due to its toxic effects. Sodium ion is the primary element considered as an alternative to Lithium. The present invention relates to an improved electrode and supercapacitor containing this electrode, which does not create pollutions if it interferes with the environment. The need for recycling facilities after the use of batteries is not required in the developed aqueous electrolyte supercapacitors. This, therefore affects the costs.

In the state of the art, one of the problems of supercapacitors using aqueous electrolyte is that water decomposes into O₂ and H₂ at 1.23 Volt in aqueous solutions and therefore the operational potential range of supercapacitors operated by aqueous electrolyte is limited. Therefore, the operational voltage range is below 1.23 V in most of the published studies. In order to increase the potential range and thus energy performance, it is generally preferred to use ionic liquids or organic electrolytes with high dissociation potential. These both increase costs and have negative effects on people and the environment. Thanks to the electrode material produced in the present invention, the operational voltage value of the supercapacitor can be increased to the level of 5.2 V even if aqueous electrolyte is used. In the literature, a supercapacitor the operating voltage range of which reaches this value has not been found directly in aqueous electrolyte systems. In bio-supercapacitors, the operating voltage value can be increased up to 4.6 V. In the literature, a supercapacitor with an operating voltage range reaching this value has not been found in the systems operated directly by human blood serum.

Another technical problem is that the performance of batteries and supercapacitors decreases with use. The performance of the supercapacitor prepared within the scope of the present invention increases as it works.

In summary, the present invention provides a supercapacitor cell with high energy and power efficiency electrode material operating in a wide potential range. Thus, it provides an electrode material that exhibits an operational potential that exceeds the decomposition potential of water in the aqueous electrolyte environment. In another aspect, the present invention provides a biocompatible energy storage system, in which a body fluid is used as an electrolyte solution, has a high energy and power density and can operate without deterioration in the number of cycles.

### Summary of the Invention

The present invention provides an operational electrode (1) for use in a supercapacitor, comprising:
- a support material combined with a current collector material, and
- an iron salt-containing polymeric composite capable of forming iron oxide or hydroxide compounds on its surface,
wherein the current collector material is impregnated with the iron salt-containing composite material.

The advantageous iron salt compound is preferably anhydrous FeCl₃. The current collector material is preferably carbon fiber fabric bonded on polystyrene foam.

Said polymeric composite may comprise a polymeric structure formed with Pyrrole, 3,4-Ethylenedioxythiophene (EDOT) and 2-Acrylamido 2-methyl-1-propane sulfonic acid (AMPS). This structure also preferably contains graphite oxide (GrO). The oxide or hydroxide compounds that can be formed on the current collector material are in the form of iron (III) or iron (II) - oxide or hydroxide structures.

The invention further provides a method for manufacturing the above electrode (1) and a supercapacitor containing said electrode. The preferred electrolyte in this capacitor is aqueous NaCl solution. The supercapacitor can be adapted to operate at a voltage between 4.0 V and 5.0 V.

The supercapacitor presented according to preferred embodiments of the invention further comprises a counter electrode (2). Here, the working electrode (1) can be arranged as a positive electrode and the counter electrode (2) as a negative electrode. However, as will be appreciated by those skilled in the art, it is possible that the electrode (1) of the invention can be arranged as a symmetrical electrode or a negative electrode depending on the type of the counter electrode (2).

In another aspect, the present invention relates to a biosupercapacitor, in which a physiological fluid, more preferably human blood serum, is used as an electrolyte. The biosupercapacitor has an operational electrode (1) containing the following elements:
- a support material combined with a current collector material, and
- an iron salt- containing polymeric composite capable of forming an iron oxide or hydroxide compound on its surface,
wherein the current collector material is impregnated with the iron salt-containing composite material.

The abovementioned iron salt and polymeric composite are as described above. In another aspect, the invention relates to a method for producing said biosupercapacitor, comprising the following steps:
a. dissolving monomers forming a polymeric composite with at least one solvent,
b. providing polymerization by adding at least one iron salt capable of forming an iron oxide or hydroxide compound to the solution and thus obtaining a composite material,
c. impregnating the resulting composite material to the support material combined with a current collecting material, and obtaining an electrode (1),
d. providing the counter electrode (2), and
e. providing an electrolyte solution (3) containing a physiological fluid between the electrodes (1, 2).

Steps b) and c) of this method preferably comprise the following steps:
- obtaining a first solution by dissolving the mixture of pyrrole and 3,4-Ethylenedioxythiophene (EDOT) in a solvent,
- obtaining a second solution by dissolving 2-Acrylamido 2-methyl-1-propane sulfonic acid (AMPS) in a solvent, and
- mixing both solutions with each other, providing polymerization by adding at least one iron salt to the mixture capable of forming an iron oxide/hydroxide compound, and obtaining a composite material.

### Brief Description of the Drawings

Figure 1 is a representative drawing of the supercapacitor structure of the present invention.
Figure 2: Electrochemical characterization of 5.0 Volt supercapacitor in 3M NaCl a) CV comparison voltammogram, b) Comparison of galvonastatic charge-discharge curves, c) Potential range optimization voltammogram, d) CV voltammogram depending on scanning speed, e) Galvonastatic charge-discharge curves at different current densities.
Figure 3: Electrochemical characterization of 4.0 Volt Supercapacitor in 3M NaCl a) CV voltammogram depending on the scanning speed, b) Galvonastatic charge-discharge curves at different current densities, c) Ohmic decline graph at 2.5 A/g d) % Capacitance performance depending on the number of cycles e) Electrochemical Impedance Spectrum Nyquist plot.
Figure 4 is the Energy-Power density Ragone plot of 5.0 Volt and 4.0 Volt supercapacitors.
Figure 5 is the SEM images of the operational electrode (electrode no.1) obtained under the specified production conditions.
Figure 6, SEM images of the operational electrode (electrode no. 1) obtained after 100000 cycles in 3M NaCl under the specified production conditions.
Figures 7a and 7b show the FTIR Spectrum and Graphite Oxide Raman Spectrum for Graphite and Graphite Oxide, respectively.
Figure 8 shows the comparative FTIR spectra of KF/Composite, KF/Composite/AMPS, KF/GrO/Composite, KF/GrO/Composite/AMPS (electrode no. 1) electrodes.
Figure 9 is the XPS results of the operational electrode (electrode no.1) at the specified production conditions.
Figure 10 is the XPS results obtained after 100000 cycles of the operational electrode (electrode no. 1) in 3M NaCl at the specified production conditions.
Fig. 11 are representative drawings of the biosupercapacitor system presented in accordance with an embodiment of the present invention a) with separator and b) without separator.
Figure 12, electrochemical characterization of implantable biosupercapacitor operating with human blood serum a) Potential range optimization voltammogram, b) CV voltammogram at different scanning speeds, c) Galvonastic charge-discharge curves at different current densities, d) % Capacitance performance depending on the number of cycles e) Electrochemical Impedance Spectrum Nyquist plot.
Figure 13 is an Energy-Power density Ragone plot of the implantable biosupercapacitor operating with human blood serum according to the present invention.
Figure 14 shows the viability analysis made with extracts prepared from the operational electrode material contained in the biosupercapacitor of the present invention.

### References List

1 Operational Electrode
2 Counter Electrode
3 Electrolyte Solution
4 Separator

### Detailed Description of the Invention

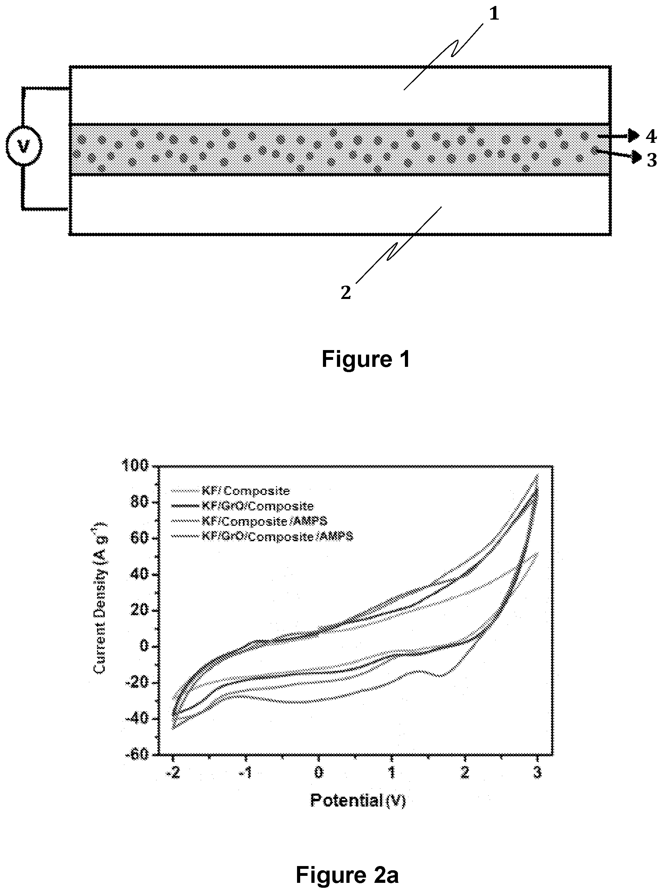

The present invention provides an energy storage system the general structure of which is shown in Figure 1, namely a supercapacitor structure. Said supercapacitor basically includes an operational electrode (1) and a counter electrode (2) arranged parallel thereto. The supercapacitor also includes a separator (4) and an electrolyte (3) impregnated therein.

The separator (4) has a porous structure that allows ion passage by acting as a barrier between the operational electrode (1) and the counter electrode (2). The separator (4) can be made from a conventional material such as filter paper, for this purpose. The abovementioned electrolyte (3) may be an aqueous electrolyte, for example NaCl electrolyte (brine), in accordance with the purposes of the invention. Optionally, it is possible to use ionic liquid electrolytes or organic electrolytes. The inventors have unexpectedly found that the limitations of present electrolytes, particularly aqueous electrolytes, in the state of art have been overcome. It is known that the operational potential of systems using liquid electrolyte is limited by the ionization energy of the electrolyte. The O₂ and H₂ decomposition of water at 1.23 Volt limits the operational potential range of supercapacitors operating with aqueous electrolyte. Therefore, the operational voltage range is below 1.23 Volt in most of the published studies. In order to increase the potential range and thus energy performance, ionic liquids or organic electrolytes with high dissociation potential are generally used. These both increase costs and negatively affect human and environmental health. Thanks to the developed electrode (1) material, the invention has the ability to increase the operation voltage range up to 5.2 Volts even if brine as an electrolyte is used.

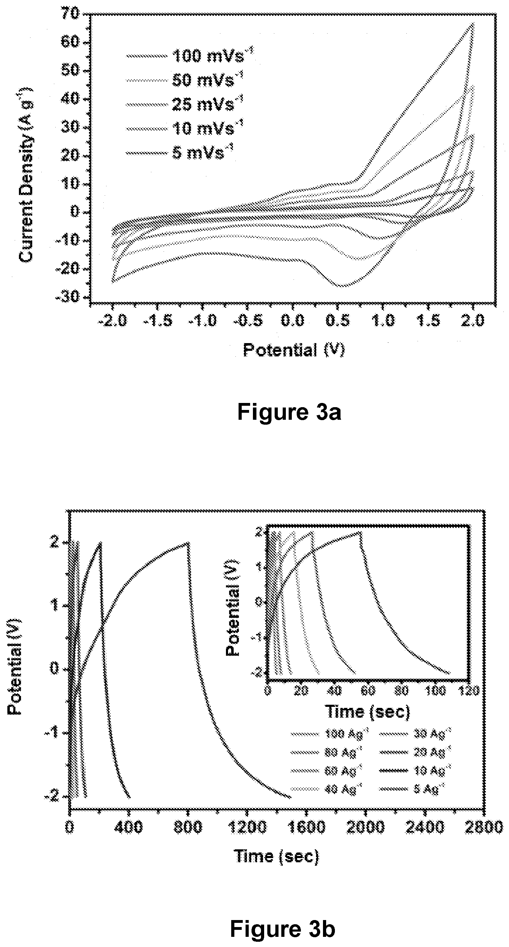

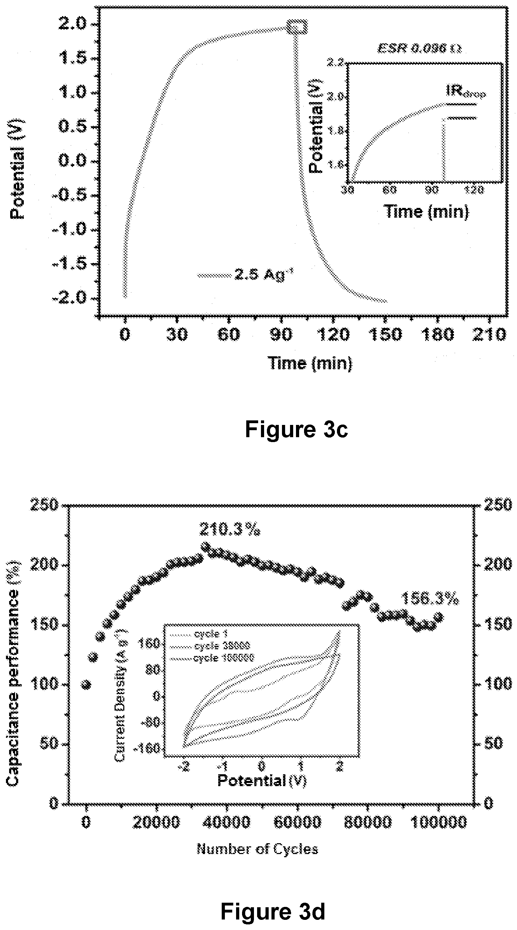

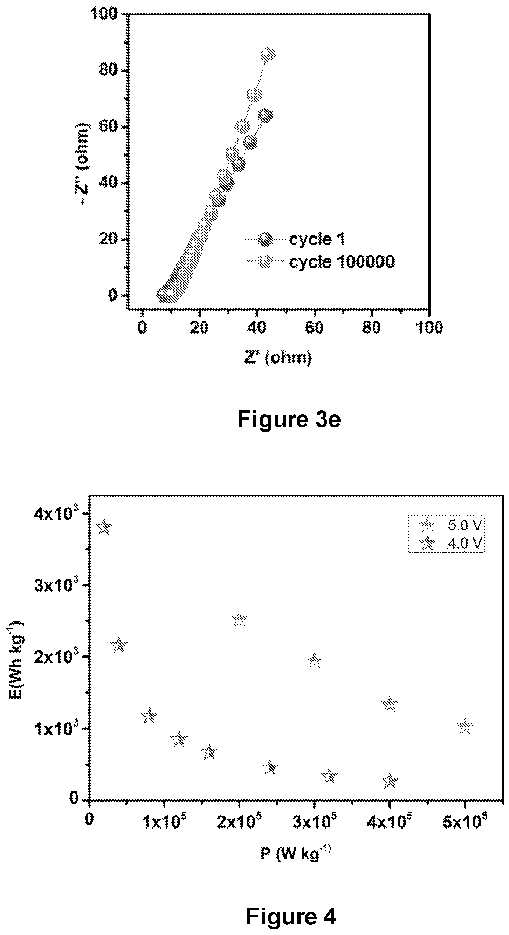

In addition, it has been surprisingly found that the performance of said electrode (1) does not decrease due to usage, on the contrary, it increases. The supercapacitor of the present invention reaches 210.3% at 38,000 cycles, and does not even decrease to its initial capacitance value after 100,000 cycles. As seen in Figure 3e, the supercapacitor of the present invention shows better capacitance characteristics than the 1st cycle even after 100,000 cycles.

The present invention allows the supercapacitor to provide higher cycle performance and lifetime as well as denser energy capacity in unit volume and higher chemical/physical stability. The supercapacitor of the invention does not generate waste which would be harmful to the environment.

The supercapacitor of the invention provides an operational electrode (1) specially developed for this purpose. The said electrode (1) contains the following elements:
- a support material combined with a current collector material, and
- an iron salt-containing polymeric composite capable of forming iron oxide or hydroxide compounds on its surface,
wherein the current collector material is impregnated with the iron salt-containing composite material.

The inventors have noticed that the ionization of the electrolyte is much more efficient, thanks to the iron oxide or hydroxides formed on the polymeric composite surface. The term "iron oxide or hydroxides" refers to a structure of the iron element selected from various iron (III) oxide/hydroxide compounds, iron (II) oxide/hydroxide compounds or complexes or oxide/hydroxide mixtures such as FeO, FeO₂, Fe₂O₃, Fe₃O₄, Fe₄O₅, Fe₅O₆, Fe₅O₇, Fe₂₅O₃₂, and Fe₁₃O₁₉, FeO(OH), FeO(OH)·nH₂O, Fe(OH)₃. Iron oxide/hydroxide compounds increase electron transfer when they come into contact with the electrolyte, and are advantageously used in the supercapacitor structure of the present invention to achieve high voltage and current density.

The iron salt contained in the polymeric composite can be any salt that can convert into iron oxide/hydroxide compounds. The preferred salt within the scope of the present invention is specifically anhydrous FeCl₃.

It is desired that the operational electrode (1) of the invention provides the required chemical stability and physical durability. In particular, an iron salt-containing polymeric composite material must be kept stably on the current collector material and the support material. The inventors have found that, as current collector material, carbon fiber fabrics hold the composite material well and are advantageous in terms of ion transport.

The support material is preferably applied as porous material with high ion conduction. When the said support material is chosen as polystyrene, it has been observed that besides having good ion transmission, a material with low cost and high mechanical strength is obtained. Here, the current collector material (e.g. carbon fiber fabric) can be adhered to the support material described above.

It is aimed that the polymeric composite material used within the electrode (1) has good ion transport characteristics. For this purpose, it has been found that a suitable composite material can be obtained by polymerizing Pyrrole, 3,4-ethylenedioxythiophene (EDOT) and 2-acrylamido 2-methyl-1-propane sulfonic acid (AMPS) monomers. It has been found that iron salt compounds convertible into oxide/hydroxide as described above act as catalysts accelerating the polymerization. Therefore, iron salt compounds have a versatile and synergistic function within the scope of the present invention.

Auxiliary materials that facilitate electron transfer can also be added to the electrode structure. The inventors have found that it is beneficial to add graphite oxide (GrO) material to the composite material.

Therefore, the present invention provides, in another aspect, a method for preparing the operational electrode (1) of the invention. This method basically comprises the following steps:
a. dissolving the monomers forming a polymeric composite with at least one solvent,
b. providing polymerization and obtaining a composite material by adding at least one iron salt that can form iron oxide or hydroxide structures to the solution,
c. impregnating the resulting composite material into the support material combined with a current collector material, and
d. obtaining the electrode (1).

As mentioned above, it is preferred to use 3,4-Ethylenedioxythiophene (EDOT) and 2-Acrylamido 2-methyl-1-propane sulfonic acid (AMPS) monomers in forming the composite material. Therefore, steps a) and b) of the method described above comprises the following steps in a preferred embodiment:
- obtaining a first solution by dissolving the mixture of pyrrole and 3,4-Ethylenedioxythiophene (EDOT) in a solvent,
- obtaining a second solution by dissolving 2-acrylamido 2-methyl-1-propane sulfonic acid (AMPS) in a solvent, whereby graphite oxide (GrO) is added therein, and
- mixing both solutions with each other, providing polymerization by adding at least one iron salt capable of forming iron oxide or hydroxide structures to the mixture, and obtaining a composite material.

Aforementioned solvents may preferably contain ethanol and distilled water. Here, the Pyrrole:EDOT volumetrical ratio can range from 1:10 to 10:10. AMPS is preferred because of its ion transporting characteristics, wherein its concentration in the second solution can be adjusted between 0.005 mol / L and 0.1 mol / L. Polymerization takes place through a hydrothermal reaction.

In a preferred embodiment of the invention, step c) of the method comprises dipping the support material combined with the current collector material into the polymer solution mixture (composite solution) and impregnating the current collector material (e.g. carbon fiber fabric) with the composite material. The so-formed operational electrode (1) is then dried and made ready for use. When the current collector material comes into contact with the electrolyte, it provides electron transfer much faster and more intensely thanks to the iron oxide/hydroxide layer it creates, and the formation of iron oxide/hydroxide surprisingly increases after each cycle. It is for this reason that the supercapacitor of the present invention exhibits superior performance compared to conventional devices.

The counter electrode (2) used in the supercapacitor structure of the invention can be of any material suitable for the purposes of the invention, for example a graphite sheet. The material used as a separator (4) can be a porous material suitable for ion passage, such as paper.

As noted above, the supercapacitor of the present invention provides a particular technical effect in systems using aqueous electrolytes. By removing the restrictions arising from the decomposition potential of the water, the operational potential in such systems can be reached as high as 5.0 V. Aqueous electrolytes are generally preferred under the present invention as they are environmentally friendly. The electrolyte solution (3) used within the scope of the present invention may be an aqueous NaCl solution. The advantages of the so-formed system are detailed in the explanations below.

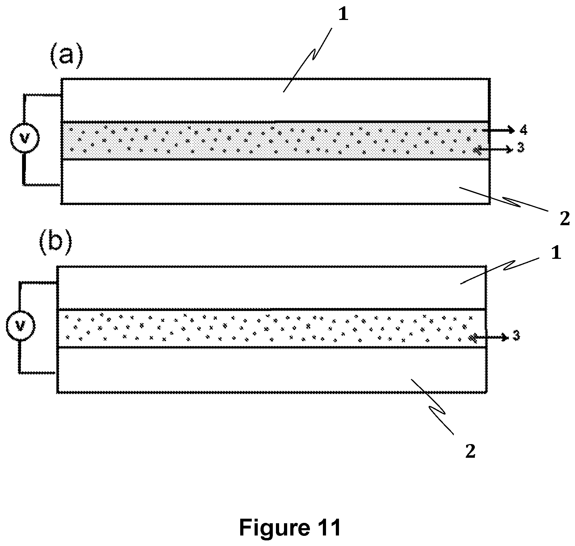

In another aspect, the present invention presents an energy storage system, the general structure of which is shown in Figure 11, that is, a biosupercapacitor structure. Said biosupercapacitor basically includes an operational electrode (1) and a counter electrode (2) arranged parallel. The supercapacitor also includes a separator (4) and an electrolyte (3) impregnated therein (Figure 11a). In an alternative embodiment, the electrolyte (3) can be filled directly between two electrodes without using the said separator (Figure 11b).

Said separator (4) has a porous structure that allows ion passage by acting as a barrier between the two electrodes (1, 2). The separator (4) can be made from a conventional material such as filter paper, for this purpose.

The electrolyte solution (3) mentioned herein is selected as a physiological fluid, in particular blood serum, for the purposes of the invention. The inventors have unexpectedly found that the limitations of present electrolytes, particularly aqueous electrolytes, in the state of art have been overcome. It is known that the operational potential of systems using liquid electrolyte is limited by the ionization energy of the electrolyte. The O₂ and H₂ decomposition of water at 1.23 Volt limits the operational potential range of supercapacitors operating with aqueous electrolyte. Therefore, the operational voltage range is below 1.23 Volt in most of the published studies. The operational potential of biosupercapacitors is even lower. These capacitors operating with various biological fluids cannot deliver the desired energy and power density. Thanks to the supercapacitor with the particular electrode (1) of the invention, the operational voltage range can reach as high as 4.6 Volts.

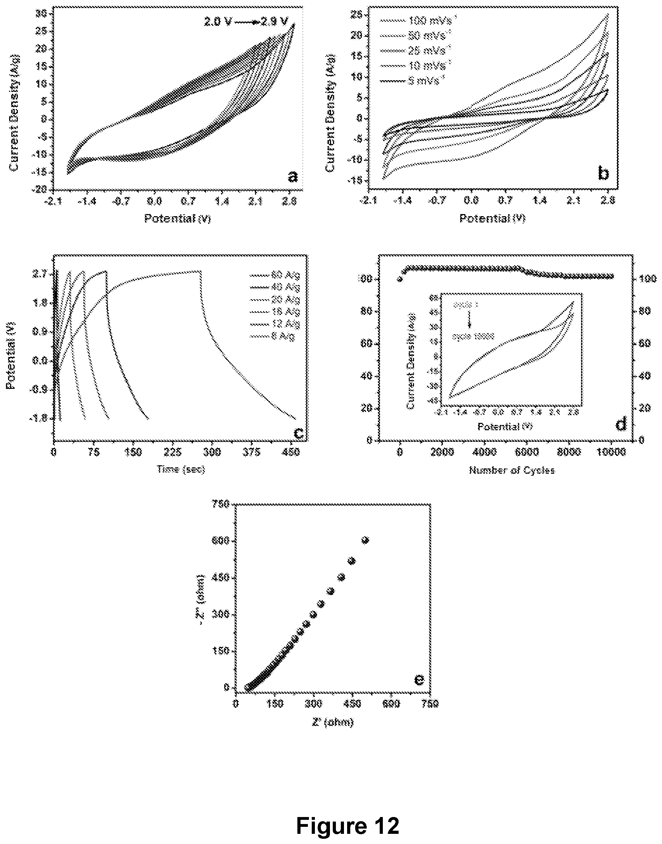

It has been surprisingly found that the performance of the biosupercapacitor of the invention does not decrease due to use, but increases. The supercapacitor of the present invention indicates that it can be used without damage for a long time since it maintains and even increases (102%) its performance even after 10000 cycles. As shown in Figure 12d, the supercapacitor of the present invention exhibits better current density than the 1st cycle even after 10000 cycles.

The present invention allows the biosupercapacitor to provide better cycle performance and lifetime as well as denser energy capacity in unit volume and higher chemical/physical stability. The biosupercapacitor of the invention does not generate waste that would be harmful to the environment.

The operational electrode (1) used in the biosupercapacitor of the invention can be prepared as described above. In embodiments for biosupercapacitors, the electrolyte solution (3) comprises an aqueous solution, more preferably a physiological fluid, and most preferably blood serum. The use of the separator (4) in the biosupercapacitor structure of the invention is optional, and it is possible to load the physiological fluid into the biosupercapacitor without the separator.

As noted above, the supercapacitor of the present invention provides a particular technical effect in systems using aqueous physiological fluids. By removing the restrictions arising from the decomposition potential of the water, the operational potential in such systems can be reached as high as 4.6 V. Aqueous electrolytes are generally preferred under the present invention as they are environmentally friendly. The electrolyte solution (3) used within the scope of the present invention can be a biological/physiological fluid. The advantages of the so-formed system are detailed in the explanations below.

### Example 1 - Supercapacitor

### Example 1a. Production of Supercapacitor

The operational electrode (1) of the invention; was manufactured on the basis of Carbon Fiber / Graphite Oxide / Composite / AMPS (*KF*/*GrO*/*Composite*/*AMPS*).

Carbon fiber woven fabric is glued onto polystyrene foam.

Pyrrole: 3,4-Ethylenedioxythiophene (EDOT) (1:10 v/v) mixture was dissolved in 15 mL ethanol: distilled water (1:1 v/v) in an ultrasonic bath and a first solution was obtained. 2-Acrylamido 2-methyl-1-propane sulfonic acid (AMPS) was added to the ethanol:water mixture to obtain a second solution of 0.01 mol/L. The first and second solutions are mixed with each other and 5mg of graphite oxide powder was added to the solution. Then 1.014 g of FeCl₃ was added to the mixture and the mixture was transferred to a hydrothermal reaction vessel. The carbon fiber woven fabric structure adhered on the polystyrene foam was dipped into the solution in the hydrothermal reaction vessel and kept in the oven at 180 °C for 12 hours for the polymerization reaction to occur in this way. The formed electrode was then dried at 90°C for 6 hours.

The counter electrode was arranged as a graphite sheet. 3M NaCl solution was prepared in distilled water to be used as an electrolyte. Filter paper was used as a separator.

### Example 1b. Comparison

The supercapacitor prepared according to the procedure described in Example 1a has been compared with various power systems available in the literature.

**Table 1. Comparison with literature**

| **Capacitance** | **Operational Potential** | **Electrolyte** | **Capacitance Percentage - Cycle life** | **Energy Density** | **Power Density** | **Reference** |
|---|---|---|---|---|---|---|
| 1713.0 F/g | 4.0 V | 3M NaCl | 100000 cycles 156.3% | 3806.7 Wh/kg | 320 kW/kg | Example 1 |
| 1137.6 F/g | 5.0 V | 3M NaCl | | 1027.8 Wh/kg | 500kW/kg | Example 1 |
| 1066 F/g | 1.7 V | 2 M KOH | 10000 cycles 91% | 104 Wh/kg | 1.27 kW/kg | Nature comm¹ 2017 |
| 33.2 F/g | 2.0 V | Na₂SO₄ | 2500 cycles 92% | 18.2 Wh/kg | 10.1 kW/kg | J Power Sources⁴,2 011 |
| 193 F/g | 1.8 V | LiClO₄ | 2000 cycles 85% | 86 Wh/kg | 25 kW/kg | J of Mate. Chem A⁵, 2014 |
| 311.6 F/g | 0.8 V | LiCl | 30000 cycles 96% | 0.89 mWh cm-³ | (0.1-1)W cm⁻³ | Advanced Energy Materials², 2015 |
| 537 F/g | 1.6 V | 1 M KCI | 8000 cycles 81.06% | 49.4 Wh/kg | - | Nature³,201 9 |

### References

*1.* Owusu, K. A. vd. anode for high-performance supercapacitors. (2017). doi:10.1038/ ncomms14264
*2.* Zeng, Y. vd. Advanced Ti-Doped Fe 2 O 3 @ PEDOT Core / Shell Anode for High-Energy Asymmetric Supercapacitors. 1-7 (2015). doi:10.1002/aenm.201402176
*3.* Amirul, M., Mohd, A., Hawa, N., Azman, N. & Kulandaivalu, S. Asymmetric supercapacitor of functionalised electrospun ethylenedioxythiophene )/ manganese oxide // activated carbon with superior electrochemical performance. Sci. Rep. 1-9 (2019). doi:10.1038/s41598-019-53421-w
4. Gao, P. C., Lu, A. H., and Li, W. C. (2011). Dual functions of activated carbon in a positive electrode for MnO2-based hybrid supercapacitor. J. Power Sources 196, 4095-4101. doi:10.1016/j.jpowsour.2010.12.05
*5.* Hou, Y., Chen, L., Liu, P., Kang, J., Fujita, T., and Chen, M. (2014). Nanoporous-metal based flexible asymmetric pseudocapacitors. J. Mater. Chem. A2, 10910-10916. doi:10.1039/ c4ta00969

The supercapacitor of the present invention offers significantly superior properties in terms of energy/power density, operational potential, cycle life and cycle efficiency.

The supercapacitor structure prepared by the procedure of Example 1a was also subjected to further performance and characterization analyzes.

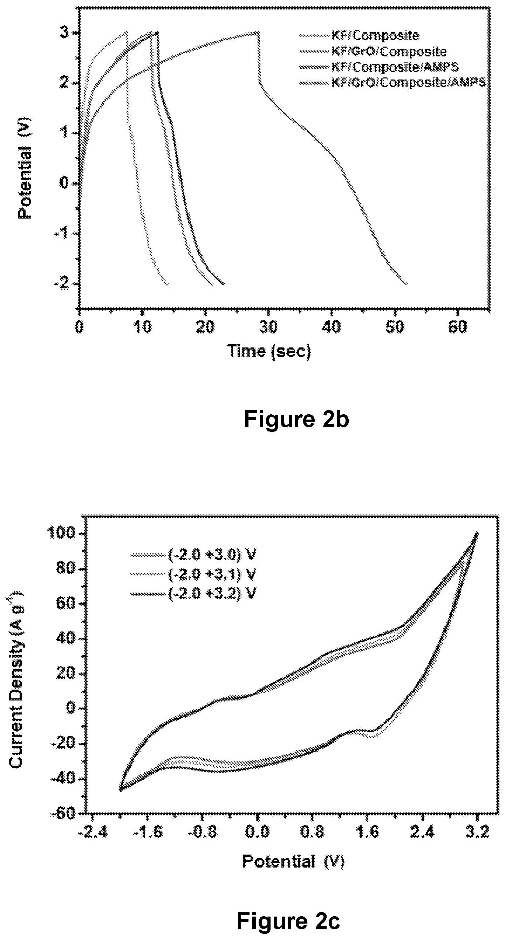

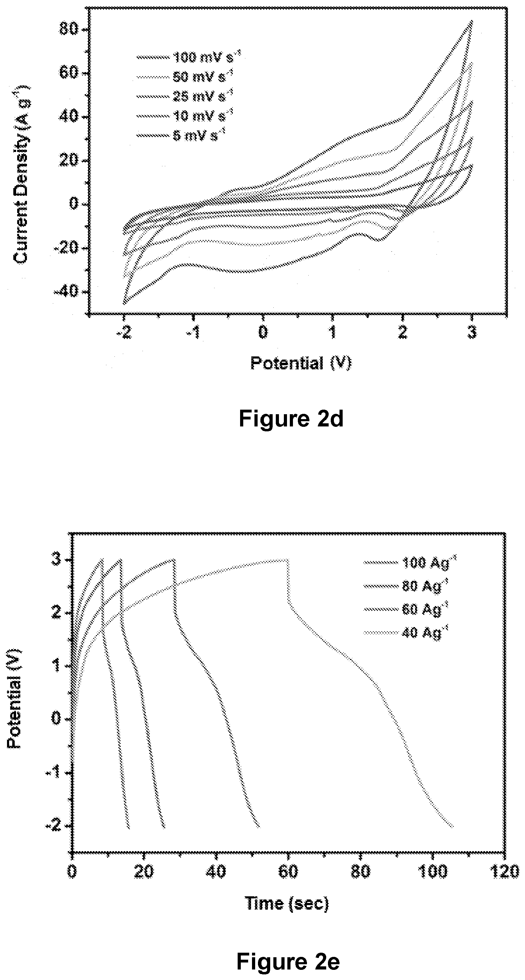

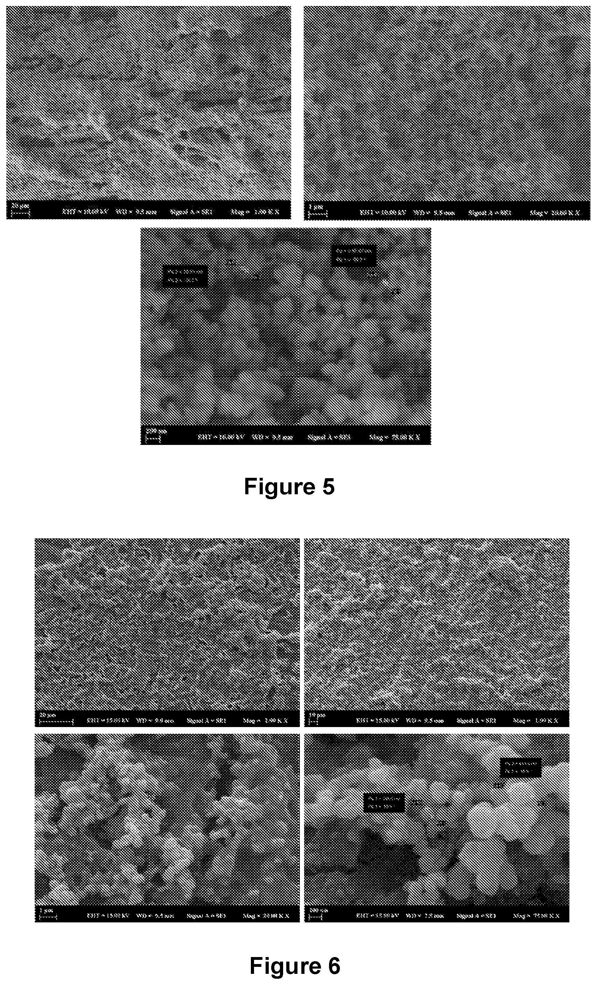

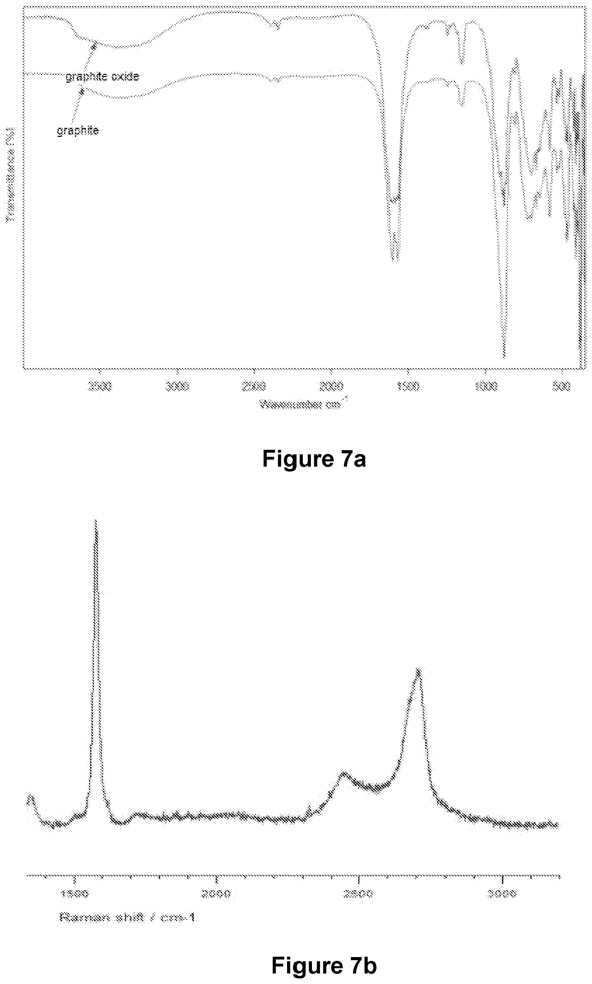

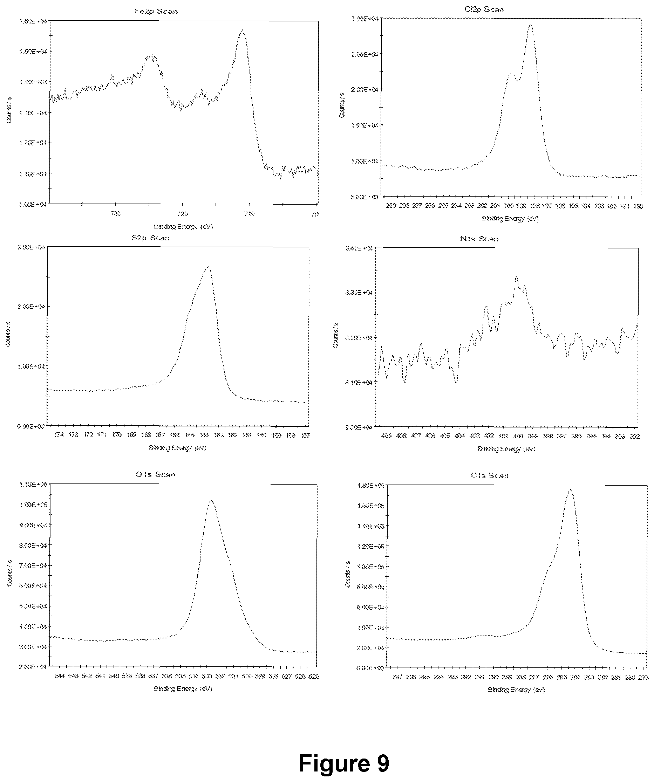

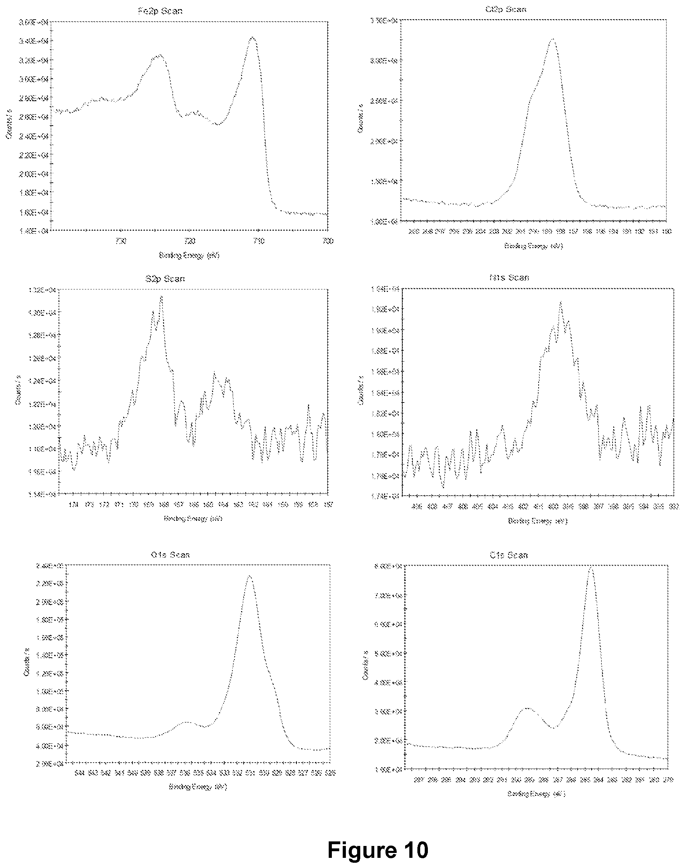

Figures 2a to 2e show various comparison data about 5.0 Volt operational potential of the supercapacitor in 3M NaCl. Although *KF*/*GrO*/*Composite*/*AMPS, KF*/*Composite*/*AMPS* and *KF*/*GrO*/*Composite* structures gave similar results in terms of current density (Figure 2a), the KF/GrO/Composite/AMPS structure of Example 1 provided a longer Galvonastatic charge-discharge profile (Figure 2b). As shown in Figures 3d and 3e, it is seen that capacitance and impedance performance unexpectedly increase as the number of cycles increases. Energy density increases at higher voltages (Figure 4). Although the operational electrode surface offers a smooth structure in nanoparticular size (Figure 5), the same functional and smooth structure is preserved even after 100,000 cycles (Figure 6). Additional FTIR and XPS analyzes (Figures 7-10) show that the electrode structure preserves its chemical stability and morphology.

### Example 2 - Biosupercapacitor

### Example 2a. Biosupercapacitor Production

The operational electrode (1) in the biosupercapacitor of the invention; was manufactured on the basis of Carbon Fiber / Graphite Oxide / Composite / AMPS (*KF*/*GrO*/*Composite*/*AMPS*)*.*

Carbon fiber woven fabric was glued onto polystyrene foam.

Pyrrole: 3,4-Ethylenedioxythiophene (EDOT) (1:10 v/v) mixture was dissolved in 15 mL ethanol: distilled water (1: 1 v/v) in an ultrasonic bath and a first solution was obtained. 2-Acrylamido 2-methyl-1-propane sulfonic acid (AMPS) was added to the ethanol:water mixture to obtain a second solution of 0.01 mol/L. The first and second solutions are mixed with each other and 5 mg of graphite oxide powder was added to the solution. Then 1.014 g of FeCl₃ was added to the mixture and the mixture was transferred to a hydrothermal reaction vessel. The carbon fiber woven fabric structure adhered on the polystyrene foam was dipped into the solution in the hydrothermal reaction vessel and kept in the oven at 180 °C for 12 hours for the polymerization reaction to occur in this way. The formed electrode was then dried at 90°C for 6 hours.

Graphite plate was used as the counter electrode for use as the cathode. Human blood serum was used as an electrolyte. Filter paper was used as a separator.

### Example 2b. Comparison

The biosupercapacitor prepared according to the procedure described in Example 2a has been compared with various power systems available in the literature.

As can be seen in the following literature, it is not possible in the state of the art to reach such an operational voltage.

**Table 2: Comparison of the Biosupercapacitors according to the present invention and the literature**

| **Specific Capacitance (F/g)** | **Operational Potential** | **Electrolyte** | **Capacitance Percentage -Cycle life** | **Energy Density (Wh/kg)** | **Power Density (kW/kg)** | **Reference** |
|---|---|---|---|---|---|---|
| 200 | 0.9 V | Bovine Serum | 5000 cycles %98 | 26 | 2.6 | Advanced Energy Materials¹ 2017 |
| 408 | 1.0 V | 3 M KOH | 5000 cycles 100% | 21 | 1.82 | Nature² 2017 |
| 20.8 | 0.8 V | Phosphate Buffer | 10000 cycles 98.3% | - | - | Carbon³ 2017 |
| 24.1 | 0.8 V | Phosphate Buffer | 1000 cycles 99% | 0.62 | 0.11 | Nano Energy⁴ 2018 |
| 13.4 | 0.8 V | Phosphate Buffer | 1000 cycles 95% | - | - | Nature⁵ 2013 |
| 31.9 | 0.8 V | Artificial Urine | 1000 cycles 94.2% | - | - | Nature⁵ 2013 |
| 633.7 | 4.6 V | Human Blood Serum | 10000 cycles 102% | 1862.5 | 276 | **Present Invention** |

| | | | | | | |
|---|---|---|---|---|---|---|
| 1. Mosa, I. M. vd. Ultrathin Graphene - Protein Supercapacitors for Miniaturized Bioelectronics. 1700358, 1-12 (2017*).* *2.* Zequine, C. vd. High-Performance Flexible Supercapacitors obtained via Recycled Jute : Bio-Waste to Energy Storage Approach. Sci. Rep. 1-12 (2017). doi:10.1038/s41598-017-01319-w *3.* He, S. vd. Biocompatible carbon nanotube fibers for implantable supercapacitors. Carbon N. Y. 122, 162-167 (2017*).* *4.* Sim, H. J. vd. Biomolecule based fiber supercapacitor for implantable device. Nano Energy 47, 385-392 (2018*).* *5.* Hur, J. vd. DNA hydrogel-based supercapacitors operating in physiological fluids. 1-7 (2013). doi:10.1038/srep01282 | | | | | | |

### Example 2c. Biocompatibility Tests

Cytotoxicity and implantation tests of supercapacitors prepared according to Example 2a were conducted by the Scientific and Technological Research Council of Turkey, Marmara Research Center, Genetic Engineering and Biotechnology Institute.

### Cytotoxicity Tests

"Biological Assessment of Medical Products: ISO 10993-5: 2009 Tests for in vitro cytotoxicity" standards were taken into consideration. In the studies, the potential of causing cell death was examined by exposing the electrode material to the cell environment and comparing it with the control group. The mouse cell line L929 was chosen for its suitability to represent the mammalian system as it is one of the cell lines recommended by ISO 10993-5. L929 cells were counted and seeded in 12 wells at 80 x 103 cells/wells. Incubation was made at 5% CO₂ for 24 hours at 37°C. Samples and controls were added to the cells without waiting and incubated at 37 °C for 24 hours at 5%. The samples were in contact with the cells for 24 hours, then they were observed microscopically. Following this, 1:50 WST-1 agent was added to the cells and color formation was waited for 2 hours. 100 µL of liquid from each well was transferred into 3 of 96 wells and absorbance was measured at 450 nm and 650 reference wavelengths in a microplate reader for viability testing.

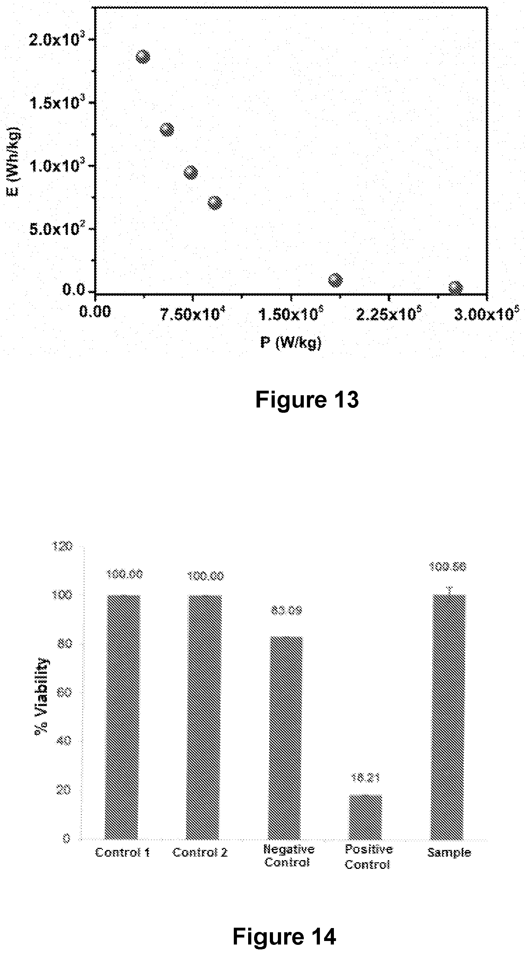

Cell viability was found to be 100.56 ± 3.07% relative to the control. In the quantitative evaluation, no zonal toxic effects were observed around the sample. Figure 14 shows the viability analysis made with the extracts prepared from the operational electrode material of the invention. The absorbance values of the samples were normalized using the absorbance values of the DMEM-F12 extract incubated in parallel with the samples for 100% viability. The data obtained for each sample were obtained as a result of studying 3 extracts randomly selected from a sample in 3 repetitions in experiments.

### Implantation Test

Implantation test was performed according to protocols of "ISO 10993-6: 2016 Biological evaluation of medical device - Part 6: Tests for local effect after implantation", "ISO 10993-2: 2006 Biological evaluation of medical device - Part 2: Animal welfare requirements" and "ISO 10993-12: 2012 Biological evaluation of medical device - Part 12: Sample Preperation". Since the electrode material is in the appropriate form and size, it has been directly tested. Silicone was used as negative control as recommended in document titled ISO 10993-12: 2012. Since the implantation test aims to reveal the local effects of the biomaterials used after implantation, it includes microscopic and macroscopic histological examinations. For histopathological evaluation, a fixation process with 4% paraformaldehyde has been done by using 10 test-control areas and 3 negative control areas at the end of the 28-day application period of electrode material implanted in the lumbodorsal region of 3-4 months old 3 Rat/Sprague Dawley animals weighing 250-300 gr. After fixation, it was subjected to washing followed by dehydration overnight. Dehydrated tissues were prepared in paraffin blocks. 5 µm thick tissue sections were taken from paraffin blocks and hematoxylin-eosin staining was performed. After the tissue sections were treated with xylol for 30 minutes, rehydration process (100% -70% Alcohol 10 minutes each) was performed. It was immersed in the hematoxylin dye for 5 minutes, followed by washing for 10 minutes with tap water and then treated with eosin for 5 minutes. After eosin dyeing, dehydration was performed by washing with tap water and subjecting to the increased alcohol series for 5 minutes. It was made transparent with xylol, covered with entellen and examined.

Due to the supercapacitor performance of the operational electrode of the invention, in vivo implantation tests were carried out in the living body in order to demonstrate its usability in implantable medical devices such as implantable brain neurostimulator implants (brain pacemaker), cochlear implants, artificial pacemakers, gastric electrical stimulators, insulin pumps. Histological evaluation and scoring in terms of cell type/responses are given in Table 2. According to the observations made, the test samples were examined according to assessment criteria of "non-irritant (0.0 - 2.9), weak irritant (3.0 - 8.9), moderate irritant (9.0 - 15.0), and severe irritant (> 15)", as stated in the document ISO 10993-6: 2016. According to Gross Pathology results, after the test and control groups were sacrificed by cervical dislocation at the end of the application period, no necrotic tissue or any other finding was found in the inspection areas of the abdominal and thoracic region. As a result of clinical observations, no clinical findings were found in 28-day observations and the regeneration of the wound lips in the operation areas was positive.

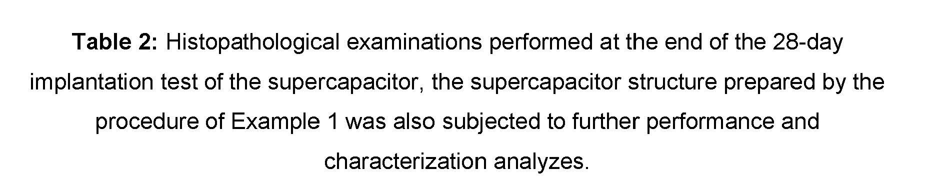

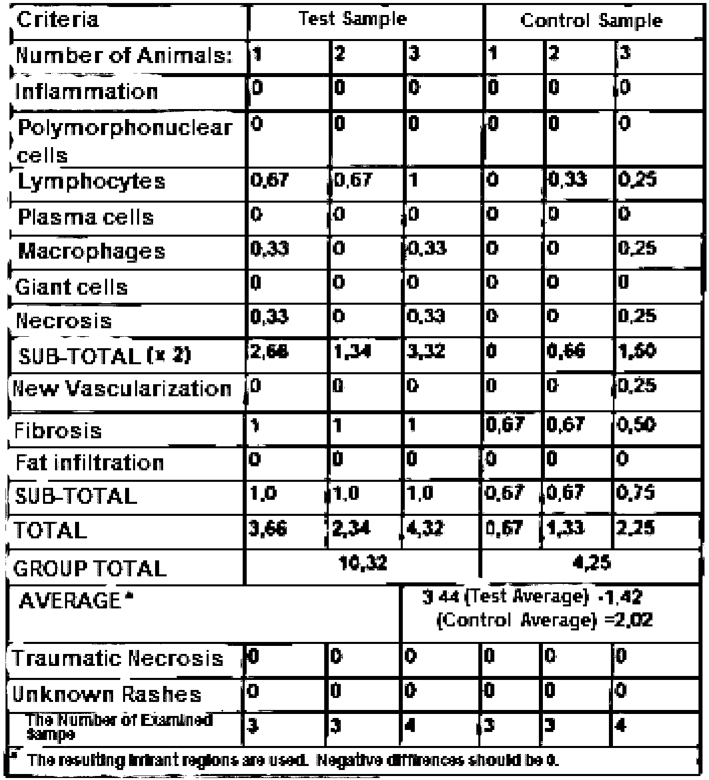

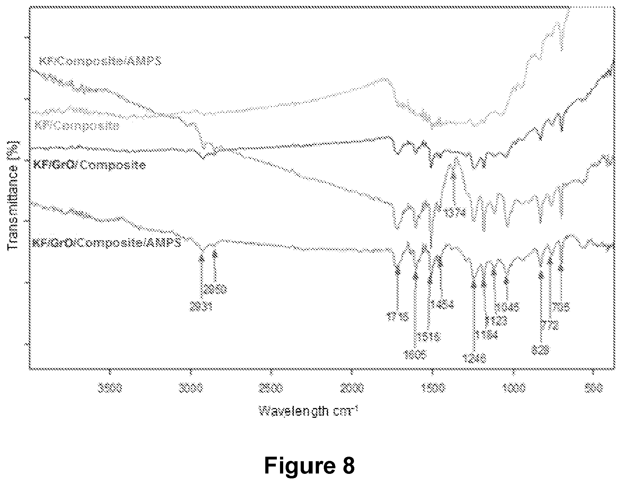

Figures 12a to 12e show the electrochemical characterization of the implantable biosupercapacitor operating with human blood serum as the electrolyte. The surface of the operational electrode offers a smooth structure in nanoparticular size (Figure 5). Additional FTIR and XPS analyzes (Figures 8-9) show that the electrode structure preserves its chemical stability and morphology.

## Claims

1. An operational electrode (1) for use in a supercapacitor, comprising:
- a support material combined with a current collector material, and
- an iron salt-containing polymeric composite which contains a polymeric structure formed with Pyrrole, 3,4-Ethylenedioxythiophene (EDOT) and 2-Acrylamido 2-methyl-1-propane sulfonic acid (AMPS), capable of forming an iron oxide or hydroxide compound on a surface of the current collector material,
wherein the current collector material is impregnated with the iron salt-containing polymeric composite material.

2. The electrode (1) according to claim 1, wherein the said iron salt is anhydrous FeCl₃.

3. The electrode (1) according to claim 1, wherein said current collector material is carbon fiber fabric.

4. The electrode (1) according to claim 1, wherein said support material is polystyrene.

5. The electrode (1) according to claim 1, wherein said polymeric composite contains graphite oxide (GrO).

6. The electrode (1) according to claim 1, wherein said iron oxide or hydroxide compound is selected from iron (III) oxide/hydroxide compounds and iron (II) oxide/hydroxide compounds or the complexes or oxide/hydroxide mixtures thereof.

7. The electrode (1) according to claim 6, wherein said iron oxide or hydroxide is selected from FeO, FeO₂, Fe₂O₃, Fe₃O₄, Fe₄O₅, Fe₅O₆, Fe₅O₇, Fe₂₅O₃₂, Fe₁₃O₁₉, FeO(OH), FeO(OH)·nH₂O, and Fe(OH)₃.

8. The electrode (1) according to claim 1, wherein said operational electrode (1) is arranged as a positive electrode.

9. A method for producing the electrode (1) according to claim 1, comprising:
a. dissolving the monomers forming the polymeric composite according to claim 1 with at least one solvent,
b. providing polymerization by adding at least one iron salt capable of forming an iron oxide or hydroxide compound to the solution, and thus obtaining a composite material,
c. impregnating the resulting composite material into the support material combined with a current collector material, and
d. obtaining the electrode (1).

10. A method according to claim 9, wherein the steps a) and b) of said method comprises:
- obtaining a first solution by dissolving a mixture of pyrrole and 3,4-Ethylenedioxythiophene (EDOT) in a solvent,
- obtaining a second solution by dissolving 2-Acrylamido 2-methyl-1-propane sulfonic acid (AMPS) in a solvent, and
- mixing both solutions with each other, providing polymerization by adding at least one iron salt to the mixture capable of forming an iron oxide/hydroxide compound, and obtaining a composite material.

11. The method according to claim 9 or 10, wherein said solvent contains ethanol and distilled water.

12. The method according to claim 10, wherein the pyrrole:EDOT volumetric ratio is in the range of 1:10 to 10:10.

13. The method according to claim 10, wherein the concentration of AMPS in the second solution is between 0.005 mol/L and 0.1 mol/L.

14. A method according to claim 9, wherein said method further comprises adding GrO to said solution.

## Patentansprüche

1. Eine Betriebselektrode (1) zur Verwendung in einem Superkondensator, umfassend:
- ein Trägermaterial in Kombination mit einem Stromabnehmermaterial und
- ein eisenhaltiger Polymerverbundwerkstoff, der eine aus Pyrrol, 3,4-Ethylendioxythiophen (EDOT) und 2-Acrylamido-2-methyl-1-propansulfonsäure (AMPS) gebildete Polymerstruktur enthält und in der Lage ist, auf der Oberfläche des Stromkollektormaterials eine Eisenoxid- oder Eisenhydroxidverbindung zu bilden,
wobei das Stromkollektormaterial mit dem eisenhaltigen polymeren Verbundmaterial imprägniert ist.

2. Die Elektrode (1) nach Anspruch 1, wobei das genannte Eisensalz wasserfreies FeCl3 ist.

3. Die Elektrode (1) nach Anspruch 1, wobei das Stromabnehmermaterial aus einem Kohlefasergewebe besteht.

4. Die Elektrode (1) nach Anspruch 1, wobei das Trägermaterial Polystyrol ist.

5. Die Elektrode (1) nach Anspruch 1, wobei der Polymerverbundstoff Graphitoxid (GrO) enthält.

6. Elektrode (1) nach Anspruch 1, wobei die Eisenoxid- oder -hydroxidverbindung aus Eisen(III)-oxid-/hydroxidverbindungen und Eisen(II)-oxid-/hydroxidverbindungen oder deren Komplexen oder Oxid-/Hydroxid-Gemischen ausgewählt ist.

7. Elektrode (1) nach Anspruch 6, wobei das Eisenoxid oder -hydroxid aus FeO, FeO₂, Fe₂O₃, Fe₃O₄, Fe₄O₅, Fe₅O₆, Fe₅O₇, Fe₂₅O₃₂, Fe₁₃O₁₉, FeO(OH), FeO(OH)·nH₂O und Fe(OH)3 ausgewählt ist.

8. Die Elektrode (1) nach Anspruch 1, wobei die Arbeitselektrode (1) als positive Elektrode ausgebildet ist.

9. Verfahren zur Herstellung der Elektrode (1) gemäß Anspruch 1, umfassend:
a. Auflösen der Monomere, aus denen der Polymerverbundstoff gemäß Anspruch 1 besteht, mit mindestens einem Lösungsmittel,
b. Auflösen der das Polymer bildenden Monomere, Durchführen der Polymerisation durch Zugabe mindestens eines Eisensalzes, das zur Bildung einer Eisenoxid- oder Eisenhydroxidverbindung fähig ist, zu der Lösung und dadurch Erhalten eines Verbundwerkstoffs, ein Verbundwerkstoff gemäß Anspruch 1 mit mindestens einem Lösungsmittel,
c. das so entstandene Verbundmaterial mit dem Trägermaterial, das mit einem Stromleitermaterial kombiniert ist, zu imprägnieren, und
d. Entnahme der Elektrode (1).

10. Verfahren nach Anspruch 9, wobei die Schritte a) und b) dieses Verfahrens Folgendes umfassen:
- Erhalten einer ersten Lösung durch Auflösen einer Mischung aus Pyrrol und 3,4-Ethylendioxythiophen (EDOT) in einem Lösungsmittel,
- Erhalten einer zweiten Lösung durch Auflösen von 2-Acrylamido-2-methyl-1-propansulfonsäure (AMPS) in einem Lösungsmittel und
- beide Lösungen miteinander vermischen, eine Polymerisation durch Zugabe mindestens eines Eisensalzes zur Mischung bewirken, das zur Bildung einer Eisenoxid-/Eisenhydroxid-Verbindung fähig ist, und ein Verbundmaterial erhalten.

11. Verfahren nach Anspruch 9 oder 10, wobei das Lösungsmittel Ethanol und destilliertes Wasser enthält.

12. Verfahren nach Anspruch 10, wobei das Volumenverhältnis von Pyrrol zu EDOT im Bereich von 1:10 bis 10:10 liegt.

13. Verfahren nach Anspruch 10, wobei die Konzentration von AMPS in der zweiten Lösung zwischen 0,005 mol/l und 0,1 mol/l liegt.

14. Verfahren nach Anspruch 9, wobei das Verfahren ferner das Hinzufügen von GrO zu der Lösung umfasst.

## Revendications

1. Électrode opérationnelle (1) destinée à être utilisée dans un supercondensateur, comprenant :
- un matériau de support associé à un matériau collecteur de courant, et
- un composite polymère contenant un sel de fer qui contient une structure polymère formée de Pyrrole, de 3,4-éthylènedioxythiophène (EDOT) et d'acide 2-Acrylamido-2-méthyl-1-propanesulfonique (AMPS), capable de former un composé d'oxyde ou d'hydroxyde de fer sur une surface du matériau collecteur de courant,
dans lequel le matériau collecteur de courant est imprégné avec le matériau composite polymère contenant le sel de fer.

2. Électrode (1) selon la revendication 1, dans laquelle ledit sel de fer est du FeCl₃ anhydre.

3. Électrode (1) selon la revendication 1, dans laquelle ledit matériau collecteur de courant est un tissu de fibres de carbone.

4. Électrode (1) selon la revendication 1, dans laquelle ledit matériau de support est du polystyrène.

5. Électrode (1) selon la revendication 1, dans laquelle ledit composite polymère contient de l'oxyde de graphite (GrO).

6. Électrode (1) selon la revendication 1, dans laquelle ledit composé d'oxyde ou d'hydroxyde de fer est choisi parmi les composés d'oxyde/hydroxyde de fer (III) et les composés d'oxyde/hydroxyde de fer (II), ou leurs complexes ou mélanges d'oxydes/hydroxydes.

7. Électrode (1) selon la revendication 6, dans laquelle ledit oxyde ou hydroxyde de fer est choisi parmi FeO, FeO₂, Fe₂O₃, Fe₃O₄, Fe₄O₅, Fe₅O₆, Fe₅O₇, Fe₂₅O₃₂, Fe₁₃O₁₉, FeO(OH), FeO(OH), nH₂O et Fe(OH)₃.

8. Électrode (1) selon la revendication 1, dans laquelle ladite électrode opérationnelle (1) est configurée en tant qu'électrode positive.

9. Procédé de fabrication de l'électrode (1) selon la revendication 1, comprenant :
a. la dissolution des monomères formant le composite polymère selon la revendication 1 dans au moins un solvant,
b. réalisation de la polymérisation en ajoutant à la solution au moins un sel de fer apte à former un composé d'oxyde ou d'hydroxyde de fer, et obtenir ainsi un matériau composite,
c. imprégnation du matériau composite ainsi obtenu dans le matériau de support associé à un matériau collecteur de courant, et
d. obtention de l'électrode (1).

10. Procédé selon la revendication 9, dans lequel les étapes a) et b) dudit procédé comprennent :
- l'obtention d'une première solution par dissolution d'un mélange de pyrrole et de 3,4-éthylènedioxythiophène (EDOT) dans un solvant,
- l'obtention d'une deuxième solution en dissolvant de l'acide 2-acrylamido-2-méthyl-1-propanesulfonique (AMPS) dans un solvant, et
- le mélange des deux solutions entre elles, la réalisation de la polymérisation en ajoutant au mélange au moins un sel de fer capable de former un composé d'oxyde/hydroxyde de fer, et l'obtention d'un matériau composite.

11. Procédé selon la revendication 9 ou 10, dans lequel ledit solvant contient de l'éthanol et de l'eau distillée.

12. Procédé selon la revendication 10, dans lequel le rapport volumétrique pyrrole/EDOT est compris entre 1:10 et 10:10.

13. Procédé selon la revendication 10, dans lequel la concentration en AMPS dans la deuxième solution est comprise entre 0,005 mol/L et 0,1 mol/L.

14. Procédé selon la revendication 9, **caractérisé en ce que** ledit procédé comprend en outre l'ajout de GrO à ladite solution.
